# Europäisches Patentamt

## European Patent Office

## Office européen des brevets

(11) Veröffentlichungsnummer: **0 225 508**
**B1**

(12) **EUROPÄISCHE PATENTSCHRIFT**

(45) Veröffentlichungstag der Patentschrift:
**06.09.89**

(21) Anmeldenummer: **86115889.7**

(22) Anmeldetag: **15.11.86**

(51) Int. Cl.⁴: **F 16 C 33/46**

(54) **Radial-Wälzlagerkäfig für zylindrische Wälzkörper.**

(30) Priorität: **07.12.85 DE 3543364**

(43) Veröffentlichungstag der Anmeldung:
**16.06.87 Patentblatt 87/25**

(45) Bekanntmachung des Hinweises auf die Patenterteilung:
**06.09.89 Patentblatt 89/36**

(84) Benannte Vertragsstaaten:
**DE ES FR GB IT**

(56) Entgegenhaltungen:
**DE-A- 2 712 834**
**FR-A- 1 513 488**
**FR-A- 2 233 524**
**US-A- 2 772 128**
**US-A- 3 353 246**

(73) Patentinhaber: **INA Wälzlager Schaeffler KG,**
**Industriestrasse 1-3 Postfach 1220,**
**D-8522 Herzogenaurach (DE)**

(72) Erfinder: **Lingner, Horst, Telemannstrasse 3,**
**D-8522 Herzogenaurach (DE)**

(74) Vertreter: **Klug, Horst, Dipl.-Ing. (FH), c/o INA Wälzlager**
**Schaeffler KG Postfach 12 20, D-8522 Herzogenaurach**
**(DE)**

## Beschreibung

Die Erfindung betrifft einen Radial-Wälzlagerkäfig für zylindrische Wälzkörper, bestehend aus zwei in zueinander parallelen Ebenen liegenden Stirnringen, die durch über den Umfang verteilte axial verlaufende Stege miteinander verbunden sind, wodurch zwischen diesen Stegen Taschen für die Aufnahme von je zwei in Umfangsrichtung hintereinander angeordneten Wälzkörpern gebildet sind, und die Taschenwände in der Nähe ihrer inneren und äußeren Begrenzungskanten in die Taschen ragende Haltevorsprünge aufweisen, wobei der Käfig aus einem flachen Band rundgerollt und an der im Bereich einer Tasche liegenden Stoßstelle an den Stirnringen verschweißt ist.

Derartige Käfige, bei denen in einer gemeinsamen Tasche zwei Wälzkörper hintereinander laufen, sind seit langer Zeit bekannt. Wenn bei diesen Käfigen die Halterung der Wälzkörper durch Haltevorsprünge bewirkt werden soll, die von den Stegen ausgehend in die Tasche ragen, dann müssen für die Taschenbreite ganz enge Toleranzen eingehalten werden. Wenn dies nicht möglich ist, müssen erheblich aufwendige Haltemaßnahmen ergriffen werden, wie z.B. von den Stirnringen ausgehende axiale Vorsprünge, die in stirnseitige Ausnehmungen der Wälzkörper eingreifen (DE-A-2 712 834).

Mit modernen Fertigungsverfahren ist es jedoch durchaus möglich, die Toleranzen einzuhalten, die erforderlich sind, wenn die Wälzkörperhalterung durch von den Stegen ausgehende Haltevorsprünge bewirkt werden soll. Bei den Käfigen, die aus einem flachen Band rundgerollt werden und deren Stoßstelle, an der die Käfigenden miteinander verschweißt werden, im Bereich einer Tasche liegt, können jedoch in dieser Tasche bedingt durch die Schweißung Breitentoleranzen auftreten, die eine sichere Halterung der Wälzkörper nicht mehr gewährleisten.

Der Erfindung liegt die Aufgabe zugrunde, das Problem der Wälzkörperhalterung in der Tasche, in der die Schweißstelle liegt, mit einfachen konstruktiven Mitteln zu lösen.

Diese Aufgabe löst die Erfindung in einfacher Weise dadurch, daß die Tasche, innerhalb der die Stoßstelle liegt, so dimensioniert ist, daß sie nur einen einzigen Wälzkörper aufnimmt und daß die Haltevorsprünge an den Stegen angeordnet sind. Die Halterung eines einzigen Wälzkörpers ist jedoch auch bei ganz erheblichen Breitentoleranzen in dieser Tasche sicher möglich.

In den Zeichnungen ist die Erfindung in einem Ausführungsbeispiel dargestellt. Es zeigt:

Fig. 1 einen erfindungsgemäßen Käfig in perspektivischer Darstellung und

Fig. 2 einen Querschnitt durch eine Wälzkörpertasche mit zwei Wälzkörpern.

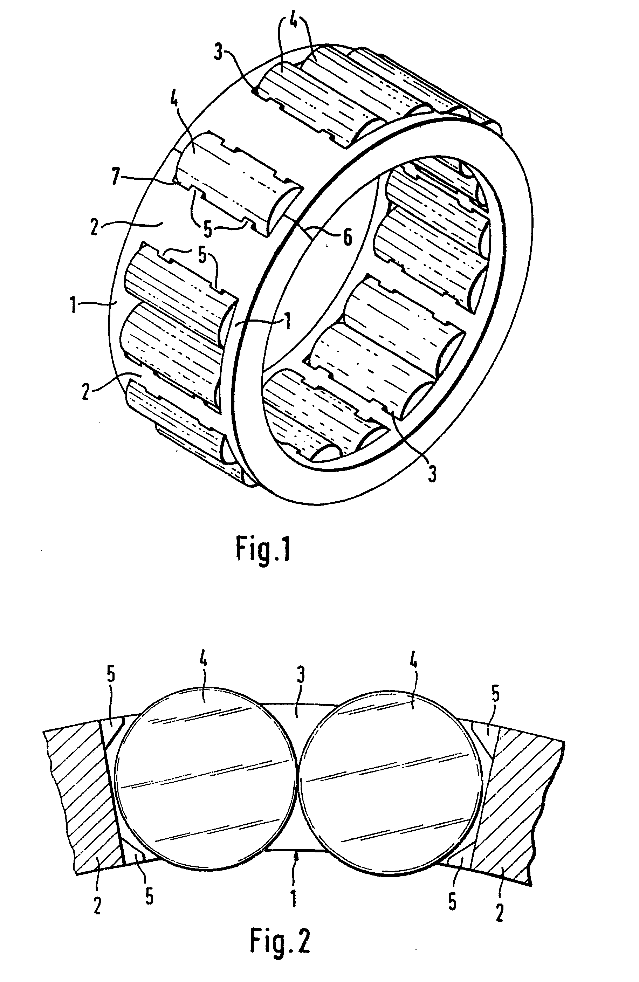

Der in Figur 1 dargestellte Käfig, der aus einem flachen Band rundgerollt ist, besteht aus den beiden Stirnringen 1, die durch axial verlaufende Stege 2 miteinander verbunden sind. Stirnringe und Stege begrenzen dabei Taschen 3, die jeweils für die Aufnahme von zwei zylindrischen Wälzkörpern 4 dienen.

Figur 2 zeigt in einem Querschnitt die Anordnung der beiden Wälzkörper 4 in einer Tasche 3, und sie läßt insbesondere erkennen, daß an den Stegen 2 Haltevorsprünge 5 vorgesehen sind, die in die Tasche 3 hineinragen und dabei die Wälzkörper 4 gegen Herausfallen in beiden radialen Richtungen halten.

In Figur 1 ist die Stoßstelle 6 zu erkennen, an der nach dem Rundbiegen die beiden Käfigenden aufeinandertreffen und verschweißt werden. Diese Stoßstelle 6 liegt im Bereich einer Tasche 7, in welcher nur ein einziger Wälzkörper 4 untergebracht ist.

## Patentanspruch

Radial-Wälzlagerkäfig für zylindrische Wälzkörper (4), bestehend aus zwei in zueinander parallelen Ebenen liegenden Stirnringen (1), die durch über den Umfang verteilte axial verlaufende Stege (2) miteinander verbunden sind, wodurch zwischen diesen Stegen Taschen (3) für die Aufnahme von je zwei in Umfangsrichtung hintereinander angeordneten Wälzkörpern (4) gebildet sind, und die Taschenwände in der Nähe ihrer inneren und äußeren Begrenzungskanten in die Taschen (3) ragende Haltevorsprünge (5) aufweisen, wobei der Käfig aus einem flachen Band rundgerollt und an der im Bereich einer Tasche liegenden Stoßstelle (6) an den Stirnringen verschweißt ist, dadurch gekennzeichnet, daß die Tasche (7), innerhalb der die Stoßstelle (6) liegt, so dimensioniert ist, daß sie nur einen einzigen Wälzkörper (4) aufnimmt, und daß die Haltevorsprünge (5) an den Stegen (2) angeordnet sind.

## Claim

Radial roller bearing cage for cylindrical rollers (4) comprising two end rings (1) lying in parallel planes and connected with one another by means of axially extending webs (2) spaced around the circumference, whereby pockets (3) are formed between these webs for the reception in each pocket of two rolling elements (4) placed behind one another in the circumferential direction, and the pocket walls have retaining projections (5) protruding into the pockets (3) near their inner and outer limiting edges, the cage being made by rolling round a flat strip and being welded at the end rings at the joint (6) lying in the region of a pocket, characterized in that the pocket (7) in which the joint (6) is located is so dimensioned that it receives only a single rolling element (4) and in that the retaining projections (5) are provided on the webs (2).

## Revendication

Cage radiale pour un palier à roulement comportant des rouleaux cylindriques (4) et constituée par deux bagues frontales (1) disposées dans des plans parallèles et reliées l'une à l'autre par des entretoises axiales (2) réparties sur la circonférence et formant entre elles des poches (3) pour recevoir, chacune deux corps de roulement (4) agencés l'un derrière l'autre en direction circonférentielle, les parois des poches étant pourvues près de leurs bords limites internes et externes de projections de retenue (5) faisant saillie dans les poches (3), la cage faite d'une bande plate roulée dont la jonction (6) aux bagues frontales où elle est soudée est située dans la région d'une poche, caractérisée en ce que la poche (7) dans laquelle est située la jonction (6) a un dimensionnement tel qu'elle ne reçoit qu'un seul corps de roulement (4) et en ce que les projections de retenue (5) sont agencées sur les entretoises (2).

Fig.1

Fig.2